(19) **Europäisches Patentamt / European Patent Office / Office européen des brevets**

(11) **EP 1 213 634 B1**

(12) **EUROPEAN PATENT SPECIFICATION**

(45) Date of publication and mention of the grant of the patent:
**18.08.2010 Bulletin 2010/33**

(51) Int Cl.:
***G05B 19/408*** *(2006.01)*

(21) Application number: **01128214.2**

(22) Date of filing: **28.11.2001**

(54) **Numerically controlled method**

Numerisch gesteuertes Verfahren

Procédé à commande numérique

(84) Designated Contracting States:
**DE FR GB IT**

(30) Priority: **06.12.2000 JP 2000371386**

(43) Date of publication of application:
**12.06.2002 Bulletin 2002/24**

(73) Proprietor: **YAMAZAKI MAZAK KABUSHIKI KAISHA**
**Niwa-gun**
**Aichi-ken (JP)**

(72) Inventors:
• **Yamazaki, Tsunehiko**
**Nagoya-shi,**
**Aichi-ken (JP)**
• **Ohnishi, Kohei**
**Yokohama-shi,**
**Kanagawa-ken (JP)**
• **Miyagawa, Naoomi**
**Gifu-shi,**
**Gifu-ken (JP)**
• **Inoue, Toshihiko**
**Komaki-shi,**
**Aichi-ken (JP)**

(74) Representative: **Bauer, Wulf et al**
**Bauer Vorberg Kayser**
**Patentanwälte**
**Goltsteinstrasse 87**
**50968 Köln (DE)**

(56) References cited:
**EP-A- 0 384 925     WO-A-97/46924**
**DE-A- 4 305 409**

**Description**

BACKGROUND OF THE INVENTION

This invention relates to a numerically controlled method according to the preamble of claim 1. Such a method is known from DE 43 05 409 A1.

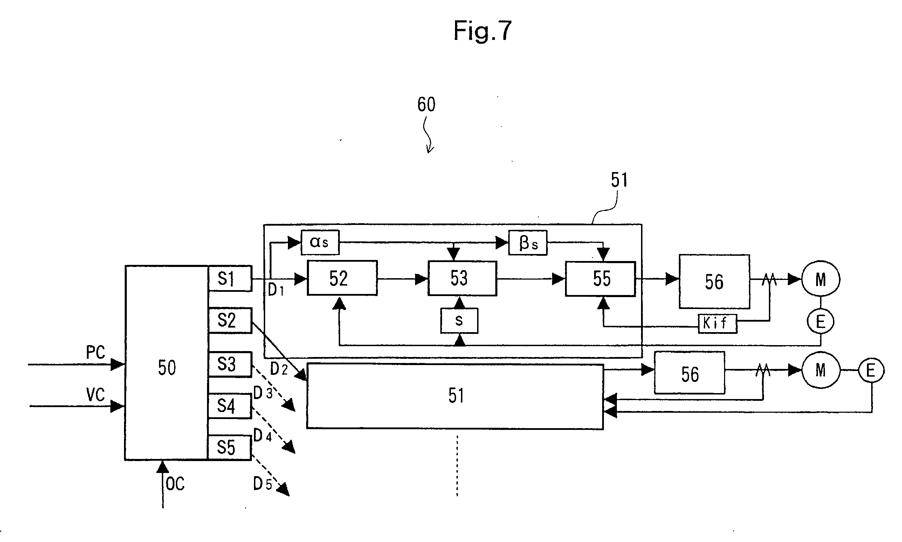

Fig.7 is a typical view for showing a conventional servo control. When servo control of each axis is performed using three dimensional spatial position command, a conventional servo control 60 to be used for a laser beam machine and a machining center makes an axis command producing portion 50 to produce the moving command concerning each control axis necessary for realizing spatial position command and velocity command instructed by a machining program on the basis of the spatial position command and the velocity command.

The moving command concerning each axis produced in this way is output to corresponding axis control portion, and the axis control portion drives a motor on the basis of the moving command. At this time, feedback is executed on a position, velocity and acceleration of the motor every sampling time so as to compute proper velocity and proper acceleration of the motor.

In such a method of determining control parameter, such as velocity and acceleration, by feedback, but the control parameter is computed on the basis of such a state that an axis is already out of a target in a sampling time. Therefore, the control axis to be controlled by the control parameter is not controlled on the basis of the state of the control axis in a present time, but on the basis of the state of the control axis before a predetermined sampling time, then, delay generates concerning the control. When machining is executed at high feeding speed or tool locus suddenly curved is programmed, errors accumulates owing to control delay. Then, it is difficult to properly control.

In the servo control 60 as shown in Fig.7, for instance, the spatial position command PC which is a track in a working space wherein a tool moves (three dimensional space) , and the velocity command are given to the individual axis command producing portion 50 (in this case, velocity override command OC may be given to the individual axis command producing portion 50). Receiving these commands PC, VC, the individual axis command producing portion 50 produces the position command Dn every sampling time s determined including acceleration and deceleration concerning each axis Sn (n=1, 2 , ... , 5) to be controlled.

An axis control portion 51 of each axis Sn produces the velocity command and the acceleration command (or power command) necessary for servo control from the position command Dn of the axis Sn, and executes axis servo control through a power control portion 56 for controlling electric power of a motor M concerning the axis Sn in such a manner that position control on the basis of the position command Dn is performed by a position loop 52, velocity control on the basis of the velocity command is performed by a velocity loop 53, acceleration control on the basis of the acceleration command is performed by an acceleration loop 55.

But, the control of velocity and acceleration has delay element in this conventional servo control 60 since the velocity command and the acceleration command are produced on the basis of the state of the control axis at this time in axis control portion 51 of each axis Sn. In particular, an influence of delay element is bigger in spline interpolation to be executed as micro division for straight line interpolation (or circular arc interpolation). Therefore, the movement of the working point which is the composite movement of each axis is not smooth and includes irregularity. The control becomes to be one including track error between the commanded track and the track of the working point.

Besides, when ideal control object wherein nonlinear element which the machine of control object has is not considered, is controlled in this control system, it is necessary to control concerning sudden change of velocity and acceleration, if spatial position command is along the track having bigger curvature, as already mentioned concerning spline interpolation or the like. In a conventional way, the velocity command and the acceleration command in this control are produced from the position command of present sampling time in the axis control portion 51, then sufficient control is impossible. Then, the error between the actual position and the command is made bigger. In the result, feeding irregularity which is integration of the acceleration and position shift which is the integration of the feeding irregularity generate.

The object of the present invention is to provide a numerically controlled method capable of reducing feeding irregularity or position shift and executing curved face machining at high accuracy, taking the above-mentioned circumstances into consideration.

SUMMARY OF THE INVENTION

This object is solved by the method of claim 1.

According to claim 1, the velocity, the acceleration, the jerk of a top end of a torch (or a top end of a tool) can be easily obtained concerning each control axis without time delay by deriving the polynomial converted into time function. Each control axis is driven and controlled on the basis of the control parameter, such as the velocity and the acceleration obtained in this way. Therefore, the preview control wherein future moving state of an object to be controlled is foresaw and control is executed so as to correspond with the foreseeing is possible. By doing so, it is possible to provide a numerically controlled method wherein the motion of the object to be controlled is correctly controlled along the locus expressed by the polynomial, feeding irregularity or position shift is reduced, and machining on curved face or the like can be executed at high accuracy.

According to claim 2

the control command can be obtained by using the polynomial having third or higher degree than third, such as the jerk command obtained by third deriving the converted polynomial as the time function.

According to claim 2 or claim 3, position command, velocity command and jerk command can be produced without time delay, preview control is possible. Even in case where velocity vector or acceleration vector is suddenly changed concerning each control axis as suddenly curved line, it is easy to deal with.

BRIEF DESCRIPTION OF THE DRAWINGS

Fig. 1 is a block diagram for showing a structure of control of a laser beam machine in the present embodiment;
Fig.2 is a typical view for showing a serve control;
Fig. 3 is a view for showing an exterior of the laser beam machine in the present embodiment;
Fig.4 is a flowchart for showing an example of multiaxis control program (algorithm);
Fig.5 is a view for showing a process of producing command of each control axis concerning a curved line of two dimensional plane;
Fig.6 is a view for showing a process of producing command of each control axis concerning a curved line of two dimensional plane; and
Fig.7 is a typical view for showing a conventional servo control.

DESCRIPTION OF THE PREFERRED EMBODIMENTS

Embodiments of the present invention will now be explained hereinafter, referring to drawings.

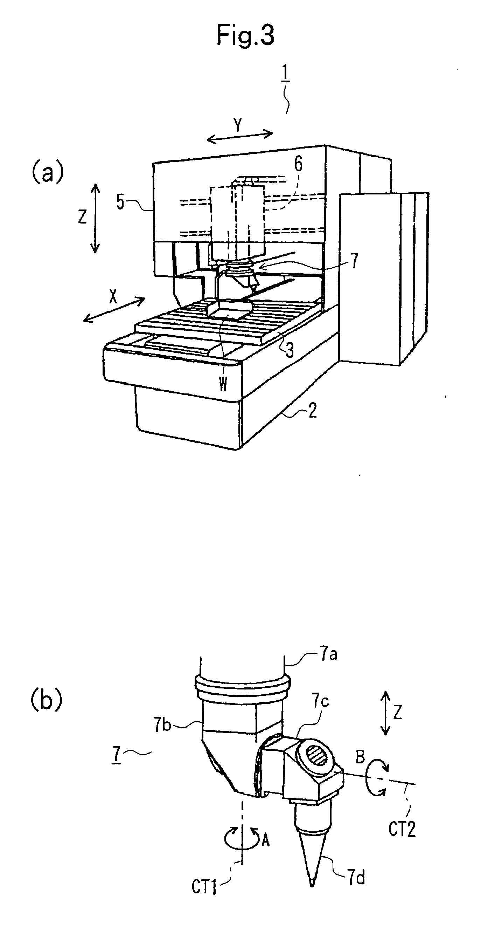

Fig.3 is a view for showing an exterior of a laser beam machine in the present embodiment. A laser beam machine 1 in the present embodiment has a base 2, and a table 3 is provided on the base 2, being free to move and drive in a horizontal X axis direction, as shown in Fig.3(a). On the table 3, a workpiece W to be machined can be located. A column 5 is provided on the base 2, bridging over the table 3, and the column 5 has a saddle 6, being free to move and drive in a horizontal Y axis direction (the direction orthogonal to the X axis direction).

The saddle 6 has a head unit 7, which is free to move and drive in Z axis direction which is up and down direction. The head unit 7 is comprised of a first portion 7a on the saddle 6 side, a second portion 7b, being free to rotate and drive in A axis direction with respect to the first portion 7a with an axial center CT1 of the first portion 7a parallel to the Z-axis as its center, a third portion 7c, being free to rotate and drive in B axis direction with respect to the second portion 7b with a horizontal axial center CT2 of the second portion 7b as its center, and a torch 7d provided on the top end side of the third portion 7c, as shown in Fig.3(b). Besides, a laser beam generating means (not shown) is provided being free to inject laser beam from the torch 7d.

As mentioned before, the laser beam machine 1 performs three dimensional machining on the workpiece W in such a manner that relative positional relation between the workpiece W located on the table 3 and the top end of the torch 7d is three-dimensionally changed, driving and positioning the table 3 in the X axis direction, the saddle 6 in the Y axis direction, the head unit 7 in the Z axis direction and the torch 7d in the A axis direction and the B axis direction and laser beam is injected from the torch 7d.

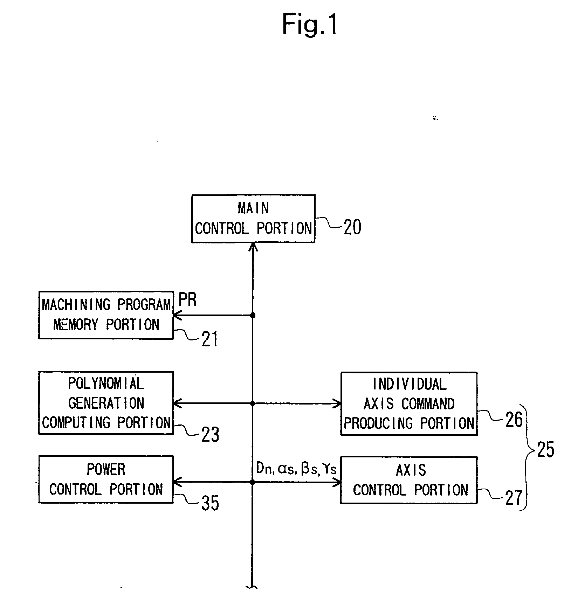

Fig. 1 is a block diagram for showing a structure of control of the laser beam machine in the present embodiment. The laser beam machine 1 has a main control portion 20, as shown in Fig.1. The main control portion 20 has a machining program memory portion 21, a polynomial generation computing portion 23, an individual axis command producing portion 26, an axis control portion 27, a power control portion 35 and the like. A servo control 25 is comprised of the individual axis command producing portion 26 and the axis control portion 27.

The laser beam machine 1 is comprised as mentioned before. Then, machining on the workpiece W with the laser beam machine 1 is executed as follows. In advance, a worker composes machining program PR by teaching (in this case, this machining program PR may be composed with a CAD and a CAM). The machining program PR composed is stored in the machining program memory portion 21 of the laser beam machine 1, as shown in Fig.1.

After a command of machining start is input by a worker, the main control portion 20 reads out the machining program PR stored in the machining program memory portion 21 on the basis of this command, and the polynomial generation computing portion 23 produces a time parameter type polynomial P(t) on the basis of a spatial position command PC for commanding moving position of the torch with respect to the workpiece, and a velocity command VC which is the moving velocity at this time which are shown in the machining program PR, that is, on the basis of relative moving locus of a tool. Subsequently, the individual axis command producing portion 26 produces commands, such as position command D1, velocity command $\alpha$ s, acceleration command $\beta$ s and jerk command $\gamma$ s for relatively moving the torch 7d with respect to the workpiece on the table 3 on the basis of the time parameter type polynomial P(t) so as to output to the axis control portion 27 of each axis.

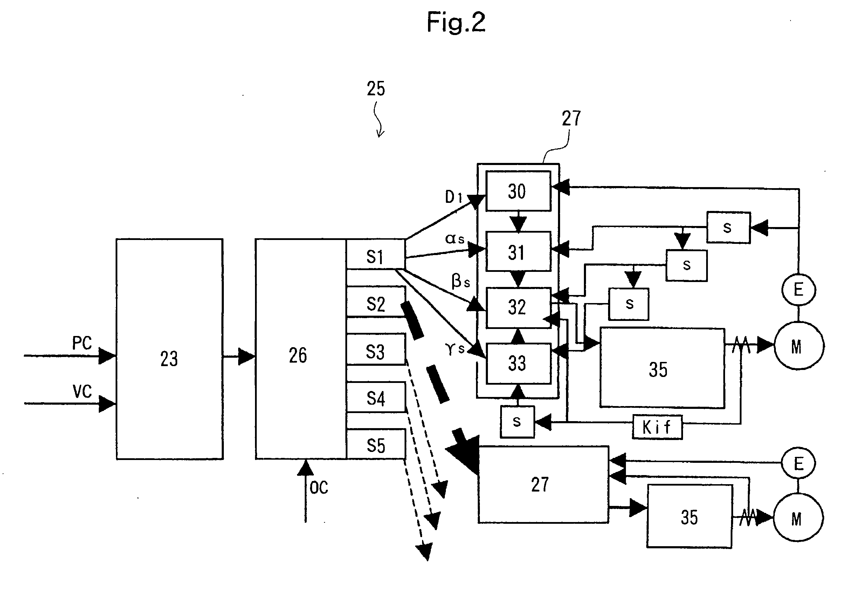

Fig.2 is a typical view for showing a servo control, and axes S1, S2, S3, S4, S5 respectively correspond to X axis, Y axis, Z axis, A axis and B axis.

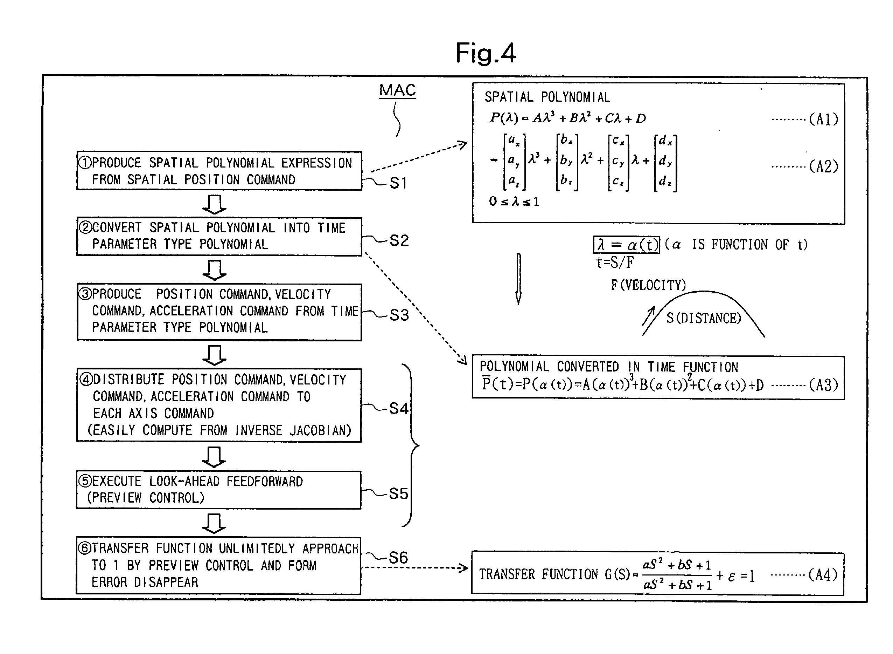

That is, from the spatial position command PC for commanding relative moving position of the torch with respect to the workpiece, and a velocity command VC which is the moving velocity at this time which are shown in the machining program PR, the polynomial generation computing portion 23 produces a spatial polynomial for approximately expressing the tool locus in a space produced by these commands, as shown in step S1 of multiaxis control program MAC of Fig. 4. This makes use of such a known property that an optional curved line (including a straight line) in a space can be approximated by a polynomial, such as spline function or NURBS function after dividing into a plurality of line elements, as shown in Fig.4. The following vector operation expression is obtained, for instance, as shown in expression (A1) of Fig.4. That is,

$$P\ (\lambda)\ =A\ \lambda^3 + B\ \lambda^2 + C\ \lambda + D \cdots\cdots\ (A1)$$

By this polynomial, a straight line, an arc or the like can be correctly expressed in addition to a spline curved line. If the axes to be controlled is three axes, that is, X, Y, and Z, for instance, the expression (A1) can be developed as shown in an expression (A2).

Then, the mutiaxis control program MAC enters into step S2, $\lambda$ of the spatial polynomial is expressed as function of time t as follows.

$$\lambda = \alpha\ (t)\ (\alpha\ \ is\ \ function\ \ of\ t)$$

The spatial polynomial (A1) is converted into the following expression by substituting $\lambda = \alpha$ (t) .

$$P\ (\alpha\ (t))=A\ (\alpha\ (t))^3 + B\ (\alpha\ (t))^2 + C(\alpha\ (t)) + D\ \cdots\cdots (A3)$$

Then, this is converted into time parameter type polynomial (A3).

Then, the tool locus instructed by the machining program PR is expressed by the time function which is the expression (A3). Thereafter, an expression for representing a position can be obtained from the time parameter type polynomial (A3), an expression for showing velocity is obtained by differentiating the polynomial (A3), an expression for showing acceleration is obtained by differentiating the expression for showing the velocity, and furthermore, an expression for showing jerk is obtained by differentiating the expression for showing the acceleration in step S3 of the multiaxis control program MAC. These expressions are output to the individual axis command producing portion 26, and the individual axis command producing portion 26 can immediately obtain the position, the velocity, the acceleration and the jerk in objective sampling time without time delay by substituting a predetermined sampling time in the expression.

That is, the velocity, the acceleration and the jerk of the top end of the torch at an optional time can be easily obtained without having delay element by differentiating the time parameter type polynomial expressed by the time function. After the tool locus, that is, the velocity command, the acceleration command and the jerk command of the top end of the torch are obtained in this way, the expressions for showing the position, the velocity, the acceleration and the jerk of the top end of the torch are distributed with respect to each control axis comprising joint space, using inverse kinematics and inverse Jacobian or the like at step S4 of the multiaxis control program MAC so as to obtain the expressions showing the velocity, the acceleration and the jerk concerning each control axis.

The individual axis command producing portion 26 obtains the velocity, the acceleration and the jerk of each axis in an optional time from the obtained expressions showing the velocity, the acceleration and the jerk concerning each control axis at step S5 of the multiaxis control program MAC so as to output to the axis control portion 27 as position command Dn, velocity command $\alpha$ s, acceleration command $\beta$ s (or power command) and jerk command $\gamma$ s. Since the velocity, the acceleration and the jerk at an optional time in future can be obtained in advance, it is sufficient for the axis control portion 27 of each axis to control each axis only so as to make the velocity, the acceleration and the jerk obtained in advance in each sampling time in future (preview control). Then, correct control with no time delay is possible. Therefore, its transfer function G(S) unlimitedly approximates to 1 as shown in step S6 and the expression (A4), and then, correct machining without shape error is possible. It is also possible to give a velocity override command OC to the individual axis command producing portion 26.

The axis control portion 27 of each axis Sn executes axis servo control through the power control portion 35 for controlling electric power of a motor M concerning the axis Sn, using the received position command Dn, the velocity command $\alpha$ s, the acceleration command $\beta$ s (or power command) and the jerk command $\gamma$ s in such a manner that position control on the basis of the position command Dn is performed by a position loop 30, velocity control on the basis of the velocity command $\alpha$ s is performed by a velocity loop 31, acceleration control on the basis of the acceleration command $\beta$ s is performed by an acceleration loop 32, and jerk control on the basis of the jerk command $\gamma$ s is performed by a jerk loop 33.

As mentioned before, the relative positional relation between the top end of the torch 7d of the laser beam machine 1 and the workpiece W is three-dimensionally changed by performing axis servo control in each axis Sn, moving the top end of the torch 7d in a space at a constant velocity, and the workpiece W is three-dimensionally machined as the above-mentioned machining program PR by injecting laser beam from the torch 7d. The polynomial which moving locus approximates is expressed by time axis function, and the position, the velocity, the acceleration and the jerk at the time in future in the process of moving the torch are computed in advance and are commanded. Then, the generation of machining irregularity owing to sudden change of moving velocity and/or moving direction can be saved, and accurate machining is possible by the torch to be controlled on the basis of the polynomial.

Since a track is approximated by a polynomial on the basis of time axis function in the control system in the present embodiment, position shift does not happen owing to the control system, but only position shift in approximation of spatial position command happens. When accuracy is obtained in this control system, it is sufficient to only take the error at the command stage into consideration. So, it is easy to control accuracy.

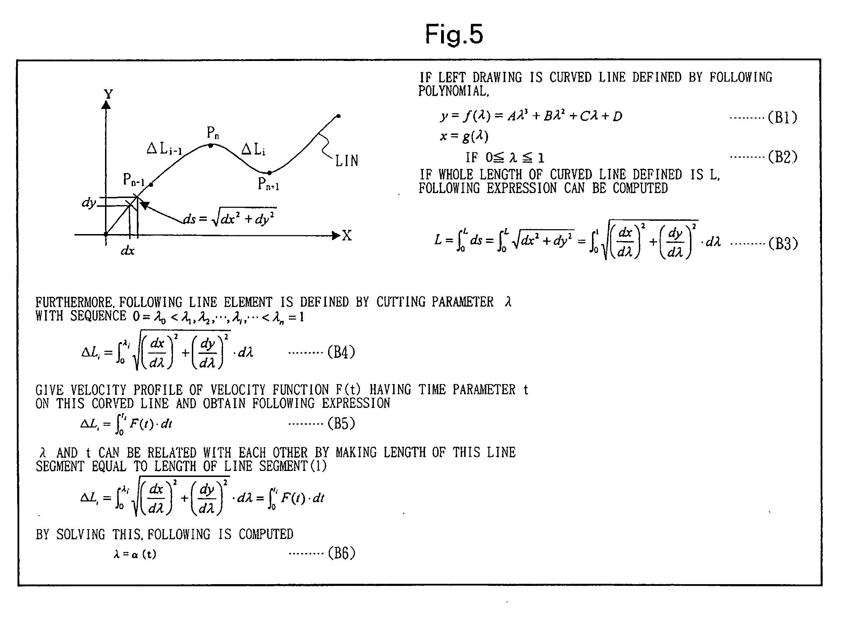

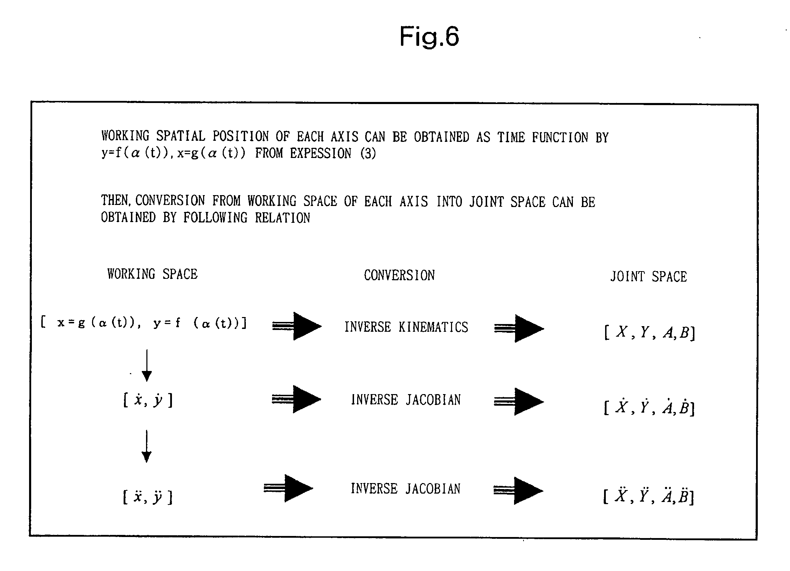

An example wherein the present invention is applied to the control of tool locus (torch locus) on two dimensional plane is shown in Figs.5 and 6. When a curved line LIN of X-Y plane is expressed as tool locus as shown in Fig.5, the curved line LIN is divided into a plurality of line elements Li with points Pn-1, Pn, Pn+1 ...., the curved line (including straight line) connecting these points Pn-1, Pn, Pn+1... ... with each other is defined by a spatial polynomial expression as shown in an expression (B1) and an expression (B2).

If the whole length of this curved line defined is L, the whole length L is expressed by an expression (B3), and the line element $\triangle$ Li comprising the curved line LIN can be defined by an expression (B4). By giving velocity profile of velocity function F(t) expressed by an expression (B5) having time parameter t on this curved line LIN to this expression (B4) so as to make the expression (B4) and the expression (B5) equal to each other, an expression (B6) is obtained. Then, $\lambda$ and time t can be connected with each other.

This is substituted for the expressions (B1) and (B2) as shown in Fig.6. Then, time parameter type polynomial can be obtained. Thereafter, commands are distributed to each axis on the basis of steps S3 and S4 of the multiaxis control program MAC, and the control in joint space allotted to each control axis is executed as mentioned before.

The before-mentioned embodiment refers to the case of controlling the laser beam machine by the numerically controlled machine according to the present invention. But, the present invention can be applied to all of control units for moving and controlling an object to be controlled with axis control in addition to the control of the laser beam machine. Furthermore, four control axes or less, and six control axes or more can be also controlled in addition to five axes control.

The present invention is explained on the basis of the embodiment heretofore. The embodiments which are described in the present specification are illustrative and not limiting. The scope of the invention is designated by the accompanying claims and is not restricted by the descriptions of the specific embodiments. Accordingly, all the transformations and changes belonging to the claims are included in the scope of the present invention.

**Claims**

1. A numerically controlled method of moving an object to be controlled along a predetermined locus by controlling n control axes (Sn) in a joint space and moving said object to be controlled along said locus, controlling each of said n control axes (Sn) in said joint space on the basis of said control command, said method comprising:

   - approximating said locus by defining a spatial polynomial in a working space, said spatial polynomial having a parameter lambda which is not dependent on time;

   **characterised by**
   converting said spatial polynomial into a polynomial as time function by converting said parameter lambda into a time function so as to produce a polynomial converted as time function;
   distributing said polynomial converted as time function to said each n control axes (Sn) in said joint space,

producing control command for said respective n control axes (Sn) in said joint space on the basis of said polynomial as time function, distributed to said n control axes in said joint space as time function.

2. The numerically controlled method as set forth in claim 1 wherein said control command is produced on the basis of a position command on the basis of said polynomial converted as time function, a velocity command obtained by first deriving said polynomial converted as time function, and an acceleration command obtained by second deriving said polynomial converted as time function.

3. The numerically controlled method as set forth in claim 1 wherein said control command is executed by computing a position and velocity at the time in future when said object to be controlled has not yet moved on the basis of said polynomial as time function and commanding.

**Patentansprüche**

1. Numerisch gesteuertes Verfahren zum Bewegen eines zu steuernden Objektes entlang eines vorbestimmten Bereiches durch die Steuerung von n Achsen (Sn) in einem gemeinsamen Raum und durch Bewegen dieses Objektes entlang dieses Bereiches, wobei jede der n Steuerungsachsen (Sn) in diesem gemeinsamen Raum aufgrund des Steuerbefehls gesteuert wird, wobei das Verfahren folgendes umfasst:

   - Approximation des Bereiches durch Definieren eines räumlichen Polynoms in einem Arbeitsraum, wobei das räumliche Polynom einen Parameter Lambda aufweist, der nicht zeitabhängig ist;

   **gekennzeichnet durch**

   das Konvertieren dieses räumlichen Polynoms in ein Polynom als Zeitfunktion **durch** Konvertieren dieses Parameters Lambda in eine Zeitfunktion zur Erzeugung eines als Zeitfunktion konvertierten Polynoms,
   das Verteilen dieses als Zeitfunktion konvertierten Polynoms auf jede der n Steuerungsachsen (Sn) in diesem gemeinsamen Raum,
   das Erzeugen eines Steuerbefehls für die jeweiligen n Steuerungsachsen (Sn) in dem gemeinsamen Raum auf der Grundlage dieses als Zeitfunktion konvertierten Polynoms, das auf die n Steuerungsachsen in diesem gemeinsamen Raum als Zeitfunktion verteilt wird.

2. Numerisch gesteuertes Verfahren nach Anspruch 1, wobei der Steuerbefehl aufgrund eines Positionsbefehls aufgrund des als Zeitfunktion konvertierten Polynoms, eines Geschwindigkeitsbefehls, das erhalten wird, indem zunächst das als Zeitfunktion konvertierte Polynom abgeleitet wird, und aufgrund eines Beschleunigungsbefehls, das erhalten wird, indem daraufhin das als Zeitfunktion konvertierte Polynom abgeleitet wird, ausgeführt wird.

3. Numerisch gesteuertes Verfahren nach Anspruch 1, wobei der Steuerbefehl ausgeführt wird, indem eine Position und die Geschwindigkeit zum zukünftigen Zeitpunkt, zu dem das zu steuernde Objekt sich noch nicht bewegt hat, aufgrund des als Zeitfunktion konvertierten Polynoms errechnet wird und indem die Steuerung vorgenommen wird.

**Revendications**

1. Procédé à commande numérique pour déplacer un objet qu'il y a lieu de commander le long d'un endroit prédéterminé en commandant n axes de commande (Sn) dans un espace commun et en déplaçant l'objet à commander le long de cet endroit, en commandant chacun des n axes de commande (Sn) dans cet espace commun sur la base de la commande de contrôle, ce procédé comprenant :

   - l'approximation de l'endroit en définissant un polynôme spatial dans un espace de travail, ce polynôme spatial ayant un paramètre lambda qui n'est pas dépendant du temps ;

   **caractérisé par**

   la conversion du polynôme spatial en un polynôme comme fonction temporelle en convertissant le paramètre lambda en une fonction temporelle de façon à produire un polynôme converti en fonction temporelle ;
   la distribution de ce polynôme converti en fonction temporelle sur chacun des n axes de commande (Sn) dans l'espace commun,
   la production de la commande de contrôle pour les n axes de commande (Sn) respectifs dans cet espace commun sur la base de ce polynôme sous forme de fonction temporelle, distribué sur n axes de commande dans l'espace commun sous forme de fonction temporelle.

2. Procédé à commande numérique selon la revendication 1, où la commande de contrôle est produite sur la base d'une commande de position sur la base de ce polynôme converti en fonction temporelle, d'une commande de vitesse obtenue en dérivant d'abord le polynôme converti en fonction temporelle et d'une commande d'accélération obtenue en dérivant ensuite le polynôme converti en fonction temporelle.

3. Procédé à commande numérique selon la revendication 1, où la commande de contrôle est exécutée en calculant une position et une vitesse à l'instant futur auquel l'objet à commander n'a pas encore bougé sur la base du polynôme sous forme de fonction temporelle et en émettant la commande.

# Fig.1

# Fig.2

# Fig.3

(a)

(b)

# Fig.4

MAC

① PRODUCE SPATIAL POLYNOMIAL EXPRESSION FROM SPATIAL POSITION COMMAND — S1

⬇

② CONVERT SPATIAL POLYNOMIAL INTO TIME PARAMETER TYPE POLYNOMIAL — S2

⬇

③ PRODUCE POSITION COMMAND, VELOCITY COMMAND, ACCELERATION COMMAND FROM TIME PARAMETER TYPE POLYNOMIAL — S3

⬇

④ DISTRIBUTE POSITION COMMAND, VELOCITY COMMAND, ACCELERATION COMMAND TO EACH AXIS COMMAND (EASILY COMPUTE FROM INVERSE JACOBIAN) — S4

⬇

⑤ EXECUTE LOOK-AHEAD FEEDFORWARD (PREVIEW CONTROL) — S5

⬇

⑥ TRANSFER FUNCTION UNLIMITEDLY APPROACH TO 1 BY PREVIEW CONTROL AND FORM ERROR DISAPPEAR — S6

SPATIAL POLYNOMIAL

$$P(\lambda) = A\lambda^3 + B\lambda^2 + C\lambda + D \quad \cdots\cdots (A1)$$

$$= \begin{bmatrix} a_x \\ a_y \\ a_z \end{bmatrix}\lambda^3 + \begin{bmatrix} b_x \\ b_y \\ b_z \end{bmatrix}\lambda^2 + \begin{bmatrix} c_x \\ c_y \\ c_z \end{bmatrix}\lambda + \begin{bmatrix} d_x \\ d_y \\ d_z \end{bmatrix} \quad \cdots\cdots (A2)$$

$$0 \le \lambda \le 1$$

$\lambda = \alpha(t)$ ($\alpha$ IS FUNCTION OF t)

t=S/F

F(VELOCITY)

S(DISTANCE)

POLYNOMIAL CONVERTED IN TIME FUNCTION

$$\overline{P}(t)=P(\alpha(t))=A(\alpha(t))^3+B(\alpha(t))^2+C(\alpha(t))+D \quad \cdots\cdots (A3)$$

TRANSFER FUNCTION $G(S) = \dfrac{aS^2 + bS + 1}{aS^2 + bS + 1} + \varepsilon = 1 \quad \cdots\cdots (A4)$

EP 1 213 634 B1

# Fig.5

IF LEFT DRAWING IS CURVED LINE DEFINED BY FOLLOWING POLYNOMIAL,

$$y = f(\lambda) = A\lambda^3 + B\lambda^2 + C\lambda + D \qquad \cdots\cdots (B1)$$

$$x = g(\lambda)$$

$$\text{IF } 0 \leqq \lambda \leqq 1 \qquad \cdots\cdots (B2)$$

IF WHOLE LENGTH OF CURVED LINE DEFINED IS L, FOLLOWING EXPRESSION CAN BE COMPUTED

$$L = \int_0^L ds = \int_0^L \sqrt{dx^2 + dy^2} = \int_0^1 \sqrt{\left(\frac{dx}{d\lambda}\right)^2 + \left(\frac{dy}{d\lambda}\right)^2} \cdot d\lambda \qquad \cdots\cdots (B3)$$

FURTHERMORE, FOLLOWING LINE ELEMENT IS DEFINED BY CUTTING PARAMETER $\lambda$ WITH SEQUENCE $0 = \lambda_0 < \lambda_1, \lambda_2, \cdots, \lambda_i, \cdots < \lambda_n = 1$

$$\Delta L_i = \int_0^{\lambda_i} \sqrt{\left(\frac{dx}{d\lambda}\right)^2 + \left(\frac{dy}{d\lambda}\right)^2} \cdot d\lambda \qquad \cdots\cdots (B4)$$

GIVE VELOCITY PROFILE OF VELOCITY FUNCTION F(t) HAVING TIME PARAMETER t ON THIS CORVED LINE AND OBTAIN FOLLOWING EXPRESSION

$$\Delta L_i = \int_0^{t_i} F(t) \cdot dt \qquad \cdots\cdots (B5)$$

$\lambda$ AND t CAN BE RELATED WITH EACH OTHER BY MAKING LENGTH OF THIS LINE SEGMENT EQUAL TO LENGTH OF LINE SEGMENT(1)

$$\Delta L_i = \int_0^{\lambda_i} \sqrt{\left(\frac{dx}{d\lambda}\right)^2 + \left(\frac{dy}{d\lambda}\right)^2} \cdot d\lambda = \int_0^{t_i} F(t) \cdot dt$$

BY SOLVING THIS, FOLLOWING IS COMPUTED

$$\lambda = \alpha(t) \qquad \cdots\cdots (B6)$$

EP 1 213 634 B1

# Fig.6

WORKING SPATIAL POSITION OF EACH AXIS CAN BE OBTAINED AS TIME FUNCTION BY
$y=f(\alpha(t))$, $x=g(\alpha(t))$ FROM EXPESSION (3)

THEN, CONVERSION FROM WORKING SPACE OF EACH AXIS INTO JOINT SPACE CAN BE
OBTAINED BY FOLLOWING RELATION

| WORKING SPACE | CONVERSION | JOINT SPACE |
|---|---|---|
| $[\ x=g(\alpha(t)),\ y=f(\alpha(t))]$ ⇒ | INVERSE KINEMATICS ⇒ | $[X, Y, A, B]$ |
| $[\dot{x}, \dot{y}]$ ⇒ | INVERSE JACOBIAN ⇒ | $[\dot{X}, \dot{Y}, \dot{A}, \dot{B}]$ |
| $[\ddot{x}, \ddot{y}]$ ⇒ | INVERSE JACOBIAN ⇒ | $[\ddot{X}, \ddot{Y}, \ddot{A}, \ddot{B}]$ |

EP 1 213 634 B1

EP 1 213 634 B1

## Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• DE 4305409 A1